# FASCICULE DE BREVET EUROPEEN

(11) **EP 0 398 081 B1**
(45) Date de publication et mention de la délivrance du brevet: **12.04.1995**
(21) Numéro de dépôt: 90108370.9
(22) Date de dépôt: 03.05.1990
(51) Int. Cl.: B62B 5/02

(54) **Dispositif de transmission**
Antriebseinrichtung
Transmission device

(30) Priorité: 17.05.1989 CH 1838/89; 17.05.1989 CH 1837/89
(43) Date de publication de la demande: 22.11.1990
(73) Titulaire: ALUWELD S.A., CH-1227 Geneve (CH)
(72) Inventeur: Reimann,Jean, CH-1241 Puplinge (CH)
(74) Mandataire: Micheli & Cie

(56) Documents cités:
- DE-A- 1 914 134
- US-A- 2 641 325
- US-A- 3 346 269
- US-A- 4 312 417
- US-A- 4 819 767

## Description

La présente invention se rapporte aux dispositifs de transmission pour la motorisation d'engins de transport tels que chariots, diables, chaises ou fauteuils roulants, et plus particulièrement pour la motorisation de tels engins qui comportent des trains de roulement formés par des flasques munis d'au moins deux roues permettant le franchissement de marches ou même la montée et la descente d'escaliers, tels que ceux décrits dans les documents US-A-3.346.269 et US-A-4.312.417.

La présente invention a pour but la motorisation d'un engin de transport tel que cité plus haut qui soit simple, léger, fiable et peu encombrant.

La présente invention a pour objet un dispositif de transmission pour la motorisation d'engin de transport, notamment de chariots, diables ou fauteuils roulant comprenant les caractéristiques énumérées à la revendication 1.

Le dessin annexé illustre schématiquement et à titre d'exemple une forme d'exécution du dispositif de transmission selon l'invention.

La figure 1 illustre un diable équipé du dispositif de transmission selon l'invention.

La figure 2 illustre à plus grande échelle, partiellement en coupe, le dispositif de transmission.

La figure 3 illustre un détail du dispositif de transmission vu suivant la flèche A de la figure 2.

La figure 4 illustre en coupe partielle schématiquement un dispositif de freinage appliqué à un axe fixe.

Les figures 5 et 6 illustrent des détails du dispositif représenté à la figure 4.

La figure 7 illustre en coupe une variante du dispositif de freinage appliqué à un arbre moteur.

Dans l'exemple illustré le dispositif est appliqué, pour les besoins de sa description seulement, à la motorisation d'un diable.

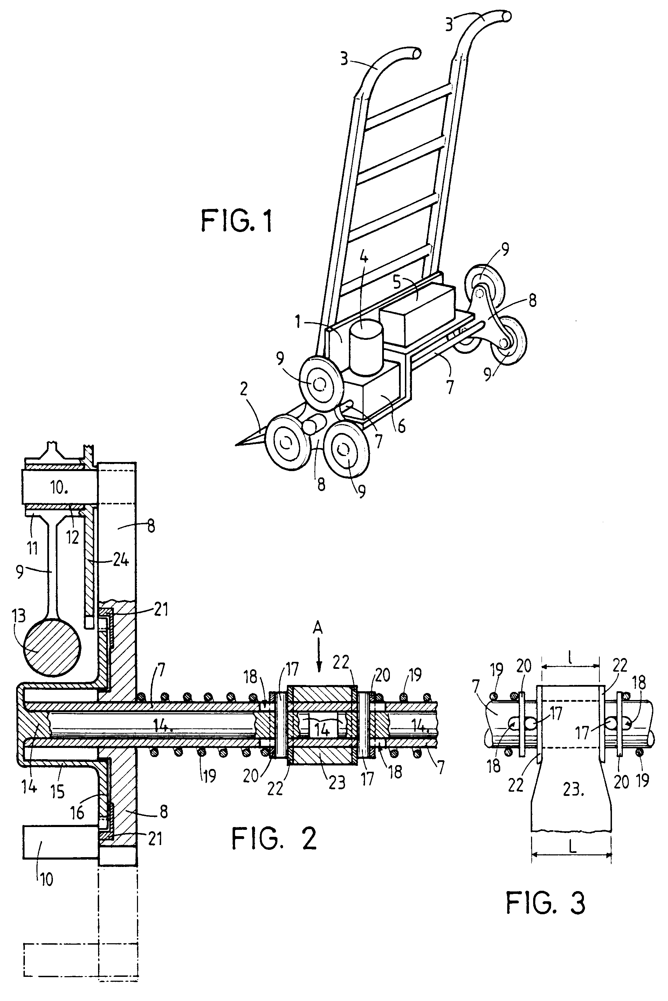

La figure 1 illustre un diable comportant un support 1 faisant partie de sa structure, une plaque de charge 2 et des poignées de manoeuvre 3.

L'ensemble de propulsion ou de motorisation de ce diable comporte un moteur électrique 4 commandé par un servo-amplificateur (non illustré) et alimenté par des batteries 5. Ce moteur est solidaire d'une boîte de transmission 6 à vis sans fin et planétaire en prise directe avec le moteur 4. Le moteur 4, les batteries 5 et la boîte de transmission 6 sont montés sur le support 1 du diable. L'arbre de sortie de la boîte de transmission 6 ou arbre moteur 7 est creux, s'étend au travers de la boîte de transmission et est muni à chacunes de ces extrémités d'un train de roulement.

Dans l'exemple illustré chaque train de roulement comporte un flasque 8 pivoté par l'intermédiaire d'un palier ou roulement à bille (non illustré) sur la surface externe de l'arbre moteur 7 à proximité de ses extrémités. Ce flasque 8 comporte au moins une, trois dans l'exemple illustré, roue 9 pivotée folle sur des axes 10 solidaires du flasque 8. A cet effet le moyeu 11 de ces roues 9 est pivoté sur un axe 10 par l'intermédiaire d'un palier lisse 12. Chaque roue 10 comporte un boudin de roulement 13.

Le dispositif de transmission proprement dit comporte deux axes de transmission 14 montés coulissant dans l'arbre moteur 7 et dont les extrémités émergeant hors de cet arbre moteur 7 sont solidaires d'une jupe 15 entourant la partie terminale de l'arbre 7 et portant un pignon denté 16.

Chaque extrémité interne, pratiquement jointive des axes de transmission 14 est munie d'une goupille 17 traversant l'arbre moteur 7 par des fentes 18. Un ressort de rappel 19 est disposé entre chaque flasque 8 et une bague 20 prenant appui sur la goupille 17 correspondante et tend à rapprocher les extrémités internes des axes de transmission 14 l'un de l'autre, c'est-à-dire à appliquer les pignons 16 contre la face externe des flasques 8. Dans cette position les pignons 16 sont en prise avec la denture interne de couronnes dentées 21 fixées sur la face externe de ces flasques 8. Ainsi lorsque le moteur est actionné, l'arbre moteur 7 entraîne les axes de transmission 14 en rotation par l'intermédiaire des goupilles 17 de sorte que les flasques 8 sont entraînés en rotation par ces axes de transmission 14, les jupes 15 et les pignons 16 engrènant avec les couronnes dentées 21 des flasques 8. Les roues 9 sont pivotées librement sur les axes 10 du flasque.

Dans cette configuration les trains de roulement du diable sont entraînés de manière à pouvoir gravir une marche ou monter et descendre des escaliers.

Le dispositif de transmission comporte encore une fourchette de commande 23 coulissant, autour de l'axe moteur 7, entre deux bagues 22 prenant appui contre les goupilles 17. Cette fourchette de commande 23 comporte une partie étroite 1 dont la largeur correspond à l'espace entre les bagues 22 lorsque les pignons 16 engrènent avec les couronnes dentées correspondantes 21 suivie d'une rampe reliant cette partie étroite à une partie large L. Par un déplacement linéaire de la fourchette, perpendiculaire à l'arbre moteur 7, introduisant la partie large L entre les bagues 22 les axes de transmission 14 sont écartés l'un de l'autre par les goupilles 17 contre l'action des ressorts 19 et les pignons 16 sont dégagés des couronnes dentées correspondantes 21. Dès cet instant les flasques 8 sont pivotés librement sur l'arbre moteur 7.

Simultanément, ce déplacement axial des axes de commande provoque l'engrènement des pignons 16 avec des roues dentées 24 solidaires des moyeux de chaque roues 9. Ainsi une rotation des arbres de transmission 14 provoque un entraînement en rotation de toutes les roues 9 de chaque flasque. Dans une variante seule une des roues 9 par flasque 8 pourrait comporter une roue dentée 24 et seule cette roue la serait entraînée en rotation.

Dans cette configuration du dispositif de transmission le diable est entraîné par la rotation d'au moins une roue 9 par flasque 8 pour ses déplacements sur des surfaces planes.

Bien entendu suivant la course axiale des axes de transmission 14 pour passer de l'engrènement des pignons 16 avec les couronnes dentées 21 à leur engrènement avec les roues dentées 24 on peut prévoir une position intermédiaire pour laquelle les pignons 16 ne sont en prises ni avec les couronnes dentées 21 ni avec les roues 24. Dans cette position intermédiaire, qui correspondrait à une zone de largeur intermédiaire de la fourchette de commande 23, le diable n'est pas entraîné, il peut être manoeuvré librement à la main.

Pour stationner le diable par contre, on place le dispositif de transmission dans l'une ou l'autre de ses deux positions actives et on arrête le moteur 4. L'inertie de la transmission permet un freinage efficace de sorte que le diable peut même être arrêté de cette façon sur des pentes relativement fortes.

La commande de la fourchette 23 dans ses déplacements linéaires peut s'effectuer soit manuellement soit par l'intermédiaire d'un système hydraulique, pneumatique ou électrique.

Il est évident que ce dispositif de transmission peut être appliqué à d'autres engins de transport par exemple des chaises roulantes ou à de plus gros engins auquel cas le moteur pourrait ne pas être électrique mais un moteur à combustion interne par exemple accouplé à une boîte à vitesse dont l'arbre de sortie traversant serait creux.

Dans une variante on peut également prévoir des trains de roulement formé chacun par une seule roue concentrique au flasque 8. Dans ce cas lorsque les pignons 16 sont en prises avec les couronnes dentées 21 l'engin est propulsé tandis que lorsque les axes de commandes 14 sont déplacés par l'action de la fourchette 23, les pignons 16 sont dégagés des couronnes 21 correspondantes et l'engin est alors en roue libre. Dans une telle exécution le flasque 8 peut être remplacé par un moyeu portant la couronne dentée et des rayons reliant ce moyeu à la gente de la roue unique.

Dans un variante on peut prévoir des axes de commande 14 creux et on peut incorporer dans ceux-ci des tiges de commande, actionnées par une seconde fourchette, similaire à la fourchette 23, agissant sur des freins coopérant avec les boudins 13 des roues 9.

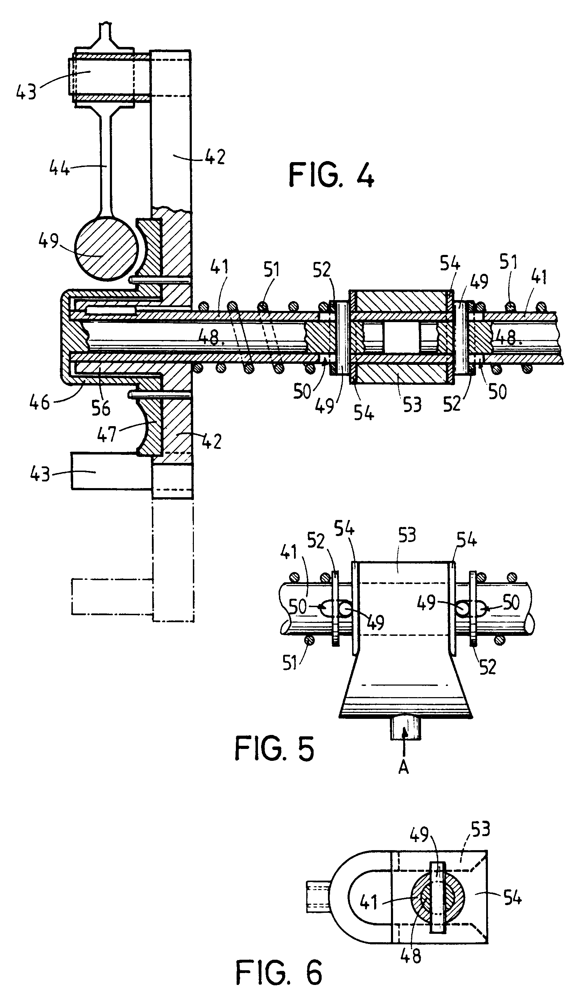

La première forme d'exécution du dispositif de freinage illustrée aux figures 4 à 6 s'applique à tout engin de transport ou de manutention non motorisé qui comporte au moins un arbre fixe 41 aux extrémités duquel sont pivotés des trains de roulement constitués dans l'exemple illustré par un flasque 42 pivoté sur l'arbre 41 et muni de plusieurs axes 43 décalés servant de pivot à des roues 44.

L'arbre 41 est creux et à l'intérieur de celui-ci sont montés coulissants deux axes de commande 48 dont les extrémités distantes l'une de l'autre sont reliées à un patin de freinage 45 par une jupe 46 entourant les extrémités de l'arbre creux 41. Ce patin 47 est guidé dans ses déplacements axiaux par des guides fixés dans le flasque 42 et passant dans des perçages correspondant du patin 47.

Le patin 47 de freinage est destiné à agir sur les boudins 49 des roues 44 pivotées sur le flasque 42 afin de les immobiliser par rapport au flasque 42.

Les extrémités des axes de commande 48 proche l'une de l'autre sont traversées par des goupilles 49 qui traversent également les parois de l'arbre creux 41 au travers de fentes 50. Des ressorts de rappel 51 sont disposés entre chaque flasque 42 et une bague 52 prenant appui contre la goupille 49 correspondante. Ces ressorts 51 tendent à rapprocher les axes de commande 48 l'un de l'autre.

Pour actionner les patins de frein 47 il suffit d'écarter les axes de commandes 48. Ceci est réalisé dans l'exemple illustré à l'aide d'une fourchette de commande 53 disposée entre les goupilles 49 et prenant appui sur celle-ci par l'intermédiaire de bagues 54. Cette fourchette de commande 53 comporte une partie 55 allant en s'élargissant de sorte que lorsqu'on exerce une poussée sur la fourchette dans le sens de la flèche A on provoque l'écartement des goupilles 49 et donc des axes de commande 48 appliquant ainsi les patins de frein 47 contre les boudins 49 des roues.

Lorsque l'engin de transport, disons le diable ou la chaise roulante, se déplace sur une surface plane, il roule sur deux roues 49 le flasque restant immobile. Lorsque les patins de frein 47 sont actionnés l'engin est stoppé, les roues 49 étant bloquées par rapport au flasque 42.

Avec de tels trains de roulement il est possible de monter et descendre des marches ou des escaliers.

Si l'arbre 41 est monté sur l'engin par l'intermédiaire de paliers (non illustré) alors les axes de commandes 48 peuvent être clavettés sur un moyeu 56 du flasque par une ou plusieurs clavettes 57.

La fourchette de commande 53,55 peut être actionnée manuellement ou par intermédaire d'un système hydraulique, pneumatique ou électrique si nécessaire.

Dans une variante le train de roulement peut ne comporter qu'une roue de grand diamètre pivotée sur la jupe 46. Dans ce cas le flasque 42 présente un diamètre réduit et les patins de frein 47 agissent sur un disque ou moyeu de la roue unique.

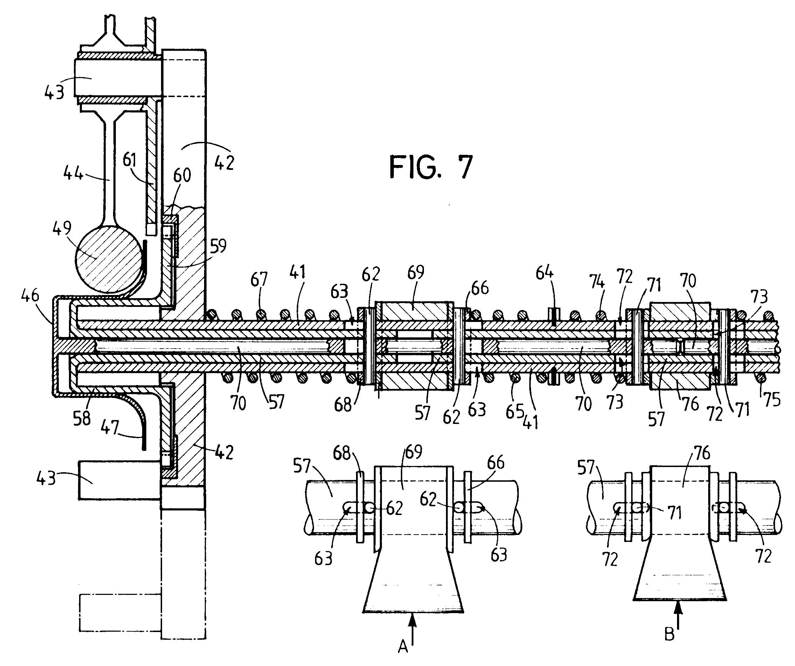

La seconde frome d'exécution du dispositif de freinage illustré à la figure 7 est appliquée à un engin motorisé. Cet engin est toujours muni de l'arbre creux 41 sur les extrémités duquels sont pivotés les flasques 42 portant les roues 44.

Dans cette exécution cet arbre 41 est moteur c'est-à-dire qu'il peut être entraîné en rotation par un moteur et une boîte à vitesse. A l'intérieur de cet arbre moteur creux sont montés coulissants deux axes de transmission 57 dont les extrémités alignées portent une jupe 58 portant elles-mêmes un pignon 59 en prise soit avec la denture interne d'une couronne dentée 60 portée par le flasque 42, soit avec des roues dentées 61 portées par le moyeu des roues 44, suivant la position axiale de l'axe de transmission 57.

Les extrémités rapprochées des axes creux de transmission 57 sont munis de goupilles 62 traversant l'arbre 41 par des fentes 63.

L'arbre creux 41 comporte une bague d'arrêt 64 servant de butée à un ressort de rappel 65 dont l'autre extrémité bute contre une bague 66 et la goupille 62. Un second ressort de rappel 67 est situé entre le flasque 42 et une bague 68 s'appuyant sur l'autre goupille 62. Ces ressorts 65,67 tendent à rapprocher les axes de transmission creux l'un de l'autre et à provoquer l'engagement des pignons 59 avec les couronnes dentées 60 en vue de l'entraînement en rotation des flasques 42.

Une fourchette de commande 69 permet par un déplacement linéaire dans le sens de la flèche A d'écarter les goupilles 62 et de séparer les pignons 59 des couronnes 60. Ces pignons 59 engrènent alors avec les roues dentées 61 pour l'entraînement en rotation des roues 44.

Des tiges de commande 70 sont montées coulissantes dans les axes de transmission 57 et portent à leurs extrémités éloignées une jupe 46 munie d'un patin de frein 47 destiné à coopérer avec le boudin 9 des roues 44. Les extrémités rapprochées de ces tiges de commande 70 sont munies de goupilles 71 traversant un axe de transmission 57 et l'arbre 41 par des fentes 62,63.

Des ressorts de rappel 74,75 sont disposés entre la bague d'arrêt 64 et une des goupilles 71 respectivement entre un flasque 42 et l'autre goupille 71 et tendent à rapprocher les tiges de commande l'une de l'autre maintenant les patins de frein 47 hors d'engagement d'avec les boudins 49 des roues 44.

Une fourchette 76 déplaçable suivant la flèche B permet d'écarter les goupilles 71 et d'appliquer par ce mouvement les patins de frein 47 contre les boudins 49 des roues 44 et ainsi de bloquer celles-ci.

On voit donc que ce dispositif de freinage peut également être appliqué à un engin motorisé dont l'arbre creux 41 tourne. En particulier ce dispositif de freinage peut équiper des chaises roulantes et tous dispositifs de transport.

## Revendications

1. Dispositif de transmission pour la motorisation d'engins de transport comportant un chassis (1,2,3) muni d'au moins deux trains de roulement à roues (8,9) comprenant chacun un flasque (8) et une ou plusieurs roues (8,9) pivotées folles sur des axes (10) solidaire de ce flasque (8) et un moteur entrainant un arbre moteur (7) en rotation, caractérisé par le fait que l'arbre moteur (7) est creux et qu'il est muni à chacune de ses extrémités d'un train de roulement (7,8), pivoté fou sur cet arbre creux (7) et comportant une couronne dentée (21); par le fait qu'il comporte deux axes de commande (14) montés coulissants dans l'arbre creux (7) et émergeant chacun d'une extrémité de celui-ci; par le fait que chaque axe de commande (14) est relié a un pignon (15,16) destiné à coopérer avec la couronne dentée correspondante (21) d'un train de roulement (8,9), et par le fait qu'il comporte un dispositif de commande (17,18,19,20,22 et 23) de la position axiale desdits axes de commande (14) par rapport à l'arbre creux (7).

2. Dispositif de transmission selon la revendication 1, caractérisé par le fait que chaque axe de commande (14) est muni d'une goupille (17) traversant l'arbre moteur creux (7) par deux fentes longitudinales opposées (18); des ressorts (19) prenant appui contre les trains de roulement (8,9) et contre ces goupilles (17) tendant à rapprocher les deux axes de commande (14) l'un vers l'autre; et par le fait qu'il comporte une fourchette d'actionnement (23) commandant par son déplacement linéaire l'écartement des deux goupilles (17) et donc des axes de commande (14) et des pignons (16) qu'ils portent.

3. Dispositif de transmission selon la revendication 2, caractérisé par le fait que chaque train de roulement (8,9) comporte un flasque (8) portant la couronne dentée (21), ce flasque (8) comportant au moins deux roues (9) pivotées folles sur des axes (10) solidaires du flasque; par le fait que le moyeu (11,12) d'au moins une de ces roues (9,13) de chaque flasque (8) est solidaire d'une roue dentée (24) engrênant avec les pignons (16) portés par les axes de commande (14) lorsque ceux-ci sont en position écartée l'un de l'autre.

4. Dispositif selon la revendication 3, caractérisé par le fait que plusieurs roues (11-13) pivotées sur un même flasque comportent des roues dentées (24) engrenant simultanément avec le pignon (16) solidaire de l'axe de commande (14) correspondant.

5. Dispositif de transmission selon l'une des revendications précédentes, caractérisé par le fait que les axes de commande (57) sont creux, que dans chacun de ceux-ci est montée coulissante une tige de commande (70) dont l'extrémité émergeant de l'axe de commande (57) correspondant est solidaire d'un frein (46,47) agissant sur le train de roulement (42,44,49), ces tiges de commande (70) étant actionnées par un organe de commande (76).

## Claims

1. Transmission device for the motorization of transport means, comprising a frame (1,2,3) provided with at least two rolling trains having rollers (8,9) each comprising a flange (8) and one or several rollers (8,9) idly pivoted on shafts (10) fast with said flange (8), and a motor driving in rotation a driving shaft (7), characterized by the fact that the driving shaft (7) is hollow and provided at each of its ends with a rolling train (7,8) idly pivoted on said hollow shaft (7) and comprising a toothed crown (21); by the fact that it comprises two control shafts (14) slidingly mounted into the hollow shaft (7) merging each out of one end of it; by the fact that each control shaft (14) is connected to a pinion (15,16) intended to cooperate with the corresponding toothed crown (21) of a rolling train (8,9); and by the fact that it comprises a control device (17,18,19,20 and 23) of the axial position of said control shafts (14) with respect to the hollow shaft (7).

2. Transmission device according to claim 1, characterized by the fact that each control shaft (14) is provided with a pin (17) passing through the hollow driving shaft (7) through two longitudinal opposed slots (18); springs bearing against the rolling trains (8,9) and against these pins (17) tending to displace towards one another the two control shafts (14); and by the fact that it comprises an actuating fork (23) controlling through its linear displacement the distance separating the two pins (17) and thus the control shafts (14) and the pinions (16) which they carry.

3. Transmission device according to claim 2, characterized by the fact that each rolling train (8,9) comprises a flange (8) carrying the toothed crown (21), this flange (8) comprising at least two wheels (9) idly pivoted on shafts (10) fastened with this flange; by the fact that the hub (11,12) of at least one of said wheels (9,13) of each flange (8) is fastened with a toothed wheel (24) meshing with the pinions carried by the control shafts (14) when said latter are in spread out position.

4. Device according to claim 3, characterized by the fact that several wheels (11-13) pivoted on a same flange comprise toothed wheels (24) meshing simultaneously with the pinion (16) fastened with the corresponding control shaft (14).

5. Transmission device according to one of the preceeding claims, characterized by the fact that the control shafts (57) are hollow, that in each of them is slidingly mounted a control rod (70) the end of which merging out of the corresponding control shaft (57) is fastened with a brake (46,47) acting on the rolling train (42,44,49), these control rods (70) being actuated by a control member (76).

## Patentansprüche

1. Übertragungsvorrichtung für den Motorbetrieb von Transportmitteln mit einem Chassis (1, 2, 3), das mit zumindest zwei Radfahrgestellen (8, 9) ausgerüstet ist, die je einen Radflansch (8) und ein oder mehrere Räder (9) umfassen, die lose schwenkbar auf mit diesem Radflansch (8) fest verbundenen Achsen (10) angebracht sind, sowie mit einem Motor, der eine Antriebswelle (7) in Drehbewegung versetzt, dadurch gekennzeichnet, dass die Antriebswelle (7) hohl ist und an ihren beiden Enden mit je einem Fahrgestell (7, 8) versehen ist, das lose schwenkbar auf dieser Hohlwelle (7) angebracht ist und einen Zahnkranz (21) trägt; dass sie zwei Steuerspindeln (14) aufweist, die gleitend in der Hohlwelle (7) sitzen und aus jeweils einem ihrer Enden herausragen; dass jede Steuerspindel (14) mit einem Zahnrad (15, 16) verbunden ist, das dazu bestimmt ist, mit dem entsprechenden Zahnkranz (21) eines Fahrgestells (8, 9) zusammenzuwirken; und dass sie eine Steuervorrichtung (17, 18, 19, 20, 22 und 23) für die axiale Stellung der benannten Steuerspindeln (14) bezüglich der Hohlwelle (7) aufweist.

2. Übertragungsvorrichtung gemäss Anspruch 1, dadurch gekennzeichnet, dass jede Steuerspindel (14) mit einem Bolzen (17) versehen ist, der die hohle Antriebswelle (7) über zwei gegenüberliegende Längsschlitze (18) durchquert; wobei Federn (19), die zwischen den Fahrgestellen (8, 9) und den Bolzen (17) eingespannt sind, die beiden Steuerspindeln (14) gegeneinander ziehen; und dass sie einen Betätigungsbügel (23) aufweist, der durch seine geradlinige Bewegung den Abstand zwischen beiden Bolzen (17) und demzufolge auch den Abstand zwischen den beiden Steuerspindeln (14) und den auf ihnen sitzenden Zahnrädern (16) steuert.

3. Übertragungsvorrichtung gemäss Anspruch 2, dadurch gekennzeichnet, dass jedes Fahrgestell (8, 9) einen Radflansch (8) aufweist, der einen Zahnkranz (21) trägt und zumindest zwei Räder (9) hat, die lose schwenkbar auf Achsen (10) angebracht sind, die fest mit dem Radflansch verbunden sind; dass die Radnabe (11, 12) von zumindest einem dieser Räder (9, 13) jedes Radflansches (8) fest mit einem Zahnrad (24) verbunden ist, das in die auf den Steuerspindeln (14) sitzenden Zahnräder (16) eingreift, wenn diese Steuerspindeln auseinandergerückt sind.

4. Vorrichtung gemäss Anspruch 3, dadurch gekennzeichnet, dass mehrere lose schwenkbar auf ein und demselben Radflansch angebrachte Räder (11 - 13) Zahnräder (24) aufweisen, die gleichzeitig in das fest mit der entsprechenden Steuerspindel (14) verbundene Zahnrad (16) eingreifen.

5. Übertragungsvorrichtung gemäss einem der vorangehenden Ansprüche, dadurch gekennzeichnet, dass die Steuerspindeln (57) hohl sind und dass ein Steuerzug (70) gleitend in jeder dieser Steuerspindeln (57) sitzt, dessen aus der entsprechenden Steuerspindel (57) herausragendes Ende fest mit einer Bremse (46, 47) verbunden ist, die auf das Fahrgestell (42, 44, 49) einwirkt, wobei diese Steuerzüge (70) durch ein Steuerorgan (76) betätigt werden.
